# EUROPEAN PATENT APPLICATION

(11) **EP 4 451 170 A1**
(43) Date of publication of application: **23.10.2024**
(21) Application number: 24167593.3
(22) Date of filing: 28.03.2024
(51) Int. Cl.: G06F 40/30

(54) **APPLYING NATURAL LANGUAGE PROCESSING (NLP) TECHNIQUES TO TIME SERIES DATA TO DERIVE ATTRIBUTES FOR USE WITH A MACHINE-LEARNING MODEL**

(30) Priority: 03.04.2023 US 202318194982
(71) Applicant: Equifax Inc., Atlanta, GA 30309 (US)
(72) Inventor: JORDAN, Lewis Charles, Atlanta, 30309 (US); AVILA ROSALES, Felipe Alfonso, Atlanta, 30309 (US); WOODFORD, Terry, Atlanta, 30309 (US); MILLER, Stephen, Atlanta, 30309 (US); TURNER, Matthew, Atlanta, 30309 (US)
(74) Representative: ATIP

(57) **Abstract**

Techniques are described herein for applying natural language processing (NLP) techniques to time series data to derive attributes of an object for use with a machine-learning model. In one example, a system can receive a time series associated with an object over a time window, where the time series includes a set of discrete values. The system can then generate a time series encoding based on the time series. The system can provide the time series encoding as input to a trained natural language processing (NLP) model, which can generate one or more output embeddings based on the time series encoding. Next, the system can determine at least one attribute associated with the object based on the one or more output embeddings. The system can then provide the attributes for use with a machine-learning model, which may for example be configured to predict a future characteristic of the object.

## Description

### Technical Field

The present disclosure relates generally to machine learning. More specifically, but not by way of limitation, this disclosure relates to applying natural language processing (NLP) techniques to time series data to derive attributes for use with a machine-learning model, for example as training data or input data for the machine-learning model, which can improve the accuracy of the machine-learning model.

### Background

Machine-learning models can be used to perform a variety of functions (e.g., acquiring, processing, analyzing, and understanding various inputs in order to produce an output that includes numerical or symbolic information). For instance, a computer system programmed with a machine-learning model can learn from training data to perform a future task that involves circumstances or inputs similar to the training data. Such a computer system may be used to recognize certain individuals or objects in an image, to simulate or predict future actions by an entity based on attributes of the entity, or to perform other operations.

In some cases, machine-learning models can be used to analyze textual data (e.g., words and sentences) to derive meaning and other relevant information from the text. The branch of artificial intelligence related to using machine-learning models to process textual data is referred to as natural language processing (NLP). Natural language processing can involve using special types of machine-learning models, also referred to as NLP models, to analyze humn language in the form of text to derive relevant information, such as the writer's intent, meaning, and sentiment. NLP models can also be used to perform other tasks related to textual data, such as text mining, text conversions between languages, and content summarization.

Although there are many NLP models, some common examples of NLP models can include word embedding models and document embedding models. A word embedding model uses a neural network to learn word associations from a large corpus of text. One example of such a word embedding model is word2vec. As the name implies, word2vec represents each distinct word in the corpus as a corresponding vector in a vector space, which may have hundreds or thousands of dimensions. A document embedding model can be considered an extension of a word embedding model. A document embedding model uses a neural network to learn associations between variable-length pieces of text (e.g., sentences, paragraphs, or entire documents) that contain a variable number of words. One example of such a document embedding model is doc2vec. Doc2vec represents each variable-length text as a corresponding vector in a vector space, which may have hundreds or thousands of dimensions. Doc2vec can also have the ability to capture the semantic "meanings" of additional pieces of context around words.

### Summary

Various examples of the present disclosure provide systems and methods for applying natural language processing (NLP) techniques to time series data to derive attributes usable with a machine-learning model. In one example, a method can include operations executed by one or more processors. The operations can include receiving one or more time series indicating discrete status information for an object over a time window, wherein the discrete status information includes a set of discrete values representing discrete statuses associated with the object over the time window. The operations can include generating one or more time series encodings based on the one or more time series. The operations can include providing the one or more time series encodings as input to a trained natural language processing (NLP) model, the trained NLP model being configured to generate one or more output embeddings corresponding to the one or more time series encodings. The operations can include determining attributes of the object based on the one or more output embeddings. The operations can include providing the attributes for use with a machine-learning model configured to predict a characteristic of the object.

Another example can include a non-transitory computer-readable storage medium having program code that is executable by one or more processors for causing the one or more processors to perform operations. The operations can include receiving one or more time series indicating discrete status information for an object over a time window, wherein the discrete status information includes a set of discrete values representing discrete statuses associated with the object over the time window. The operations can include generating one or more time series encodings based on the one or more time series. The operations can include providing the one or more time series encodings as input to a trained natural language processing (NLP) model, the trained NLP model being configured to generate one or more output embeddings corresponding to the one or more time series encodings. The operations can include determining attributes of the object based on the one or more output embeddings. The operations can include providing the attributes for use with a machine-learning model configured to predict a characteristic of the object.

Still another example can include a system having one or more processors and one or more memories, where the one or more memories store instructions executable by the one or more processors for causing the one or more processors to perform operations. The operations can include receiving one or more time series indicating discrete status information for an object over a time window, wherein the discrete status information includes a set of discrete values representing discrete statuses associated with the object over the time window. The operations can include generating one or more time series encodings based on the one or more time series. The operations can include providing the one or more time series encodings as input to a trained natural language processing (NLP) model, the trained NLP model being configured to generate one or more output embeddings corresponding to the one or more time series encodings. The operations can include determining attributes of the object based on the one or more output embeddings. The operations can include providing the attributes for use with a machine-learning model configured to predict a characteristic of the object.

This summary is not intended to identify key or essential features of the claimed subject matter, nor is it intended to be used in isolation to determine the scope of the claimed subject matter. The subject matter should be understood by reference to appropriate portions of the entire specification, any or all drawings, and each claim.

The foregoing, together with other features and examples, will become more apparent upon referring to the following specification, claims, and accompanying drawings.

### Brief Description of the Drawings

Features, embodiments, and advantages of the present disclosure are better understood when the following Detailed Description is read with reference to the accompanying drawings.
FIG. 1 shows an example of a process for applying natural language processing (NLP) techniques to time series data to derive attributes for use with a machine-learning model according to some aspects of the present disclosure.
FIG. 2 shows an example of a process for deriving additional attributes from one or more time series using natural-language processing techniques according to some examples of the present disclosure.
FIG. 3 shows an example of a process for using the derived attributes with a machine-learning model according to some aspects of the present disclosure.
FIG. 4 shows a first example of an architecture for a machine-learning model according to some aspects of the present disclosure.
FIG. 5 shows a second example of an architecture for a machine-learning model according to some aspects of the present disclosure.
FIG. 6 shows a flowchart of an example of a process for applying natural language processing (NLP) techniques to time series data to derive attributes for use with a machine-learning model according to some aspects of the present disclosure.
FIG. 7 shows a block diagram of an example of a computer system usable to implement some aspects of the present disclosure.

### Detailed Description

Certain aspects and features of the present disclosure relate to applying natural language processing (NLP) techniques to time series data for deriving attributes usable with machine-learning models. For example, a computer system can receive a time series indicating discrete status information related to an object over a prior time window. The computer system can generate a time series encoding for the time series, where the time series encoding is a representation of the time series data in the form of a numerical vector that is more suitable for use with a NLP model. The computer system can then provide the time series encoding as input to the NLP model, which can generate one or more output embeddings based on the time series encoding. To generate the output embeddings, the NLP model may be configured to treat the discrete values of the time series similarly to how it treats words in a text. The discrete values may be, for example, ordinal numeric values and/or non-numeric categorical values. The output embeddings can therefore represent certain aspects of the time series data in vector space similarly to how the output embeddings would normally represent certain aspects of a text in vector space. For example, the NLP model can output a set of word embeddings that would normally represent the individual words in vector space but, in this context, represent the individual discrete values from the time series in vector space. The NLP model may additionally or alternatively output a document embedding that would normally represent a variable-length text as a whole in vector space but, in this context, represents the time series as a whole in vector space. Since the output embeddings can provide meaningful insights about the object during the prior time window, the computer system can next analyze the output embeddings to derive attributes associated with the object. The computer system can then use those attributes as training data or input data for a target machine-learning model (e.g., a machine-learning model that is separate from the NLP model). This can improve the accuracy of the target machine-learning model, for example by providing a more robust set of training data or input data that includes attributes that may otherwise be unavailable to the target machine-learning model.

Because NLP models are normally designed and used to process text, data scientists generally use other types of models to process numerical data like a time series. Those other types of models are referred to herein as numerical-processing models. Data scientists may use these numerical-processing models to identify attributes of (e.g., patterns in) the numerical data for use in downstream processes. For example, the identified attributes may be used downstream as training data or input data for a machine-learning model, such as a neural network or a support vector machine. But these numerical-processing models may fail to identify certain attributes of the numerical data that provide useful contextual information and insights. For example, a numerical-processing model may count the total number of times that each of six events occurred during a prior time window, but may fail to determine other relevant information such as how many times certain sequences of the six events occurred, because numerical-processing models often fail to consider context. Without the contextual attributes, the downstream processes can be negatively affected. For example, a machine-learning model that is trained without these contextual attributes may consume more processing power and memory in converging to a result, or return a result that is less accurate, than if the model was trained using the contextual attributes. As another example, a predictive model that is provided with an input that lacks these additional attributes may consume more processing power and memory in converging to a result, or return a result that is less accurate, than if provided with the contextual attributes.

Some examples of the present disclosure can overcome one or more of the abovementioned problems by treating time series data like text by applying one or more NLP techniques to the time series to derive relevant attributes (e.g., contextual attributes) that may be missed by numerical-processing models. One example of such an NLP technique can include identifying one or more *n*-grams in a set of input data, where an *n*-gram can be a contiguous sequence of *n* tokens (e.g., words or characters) in the set of input data. Another example of such an NLP technique can include applying a text embedding model, such as a word embedding model or a document embedding model, to a set of input data. Once the attributes are determined, they can then be used in downstream processes to improve the accuracy of the machine-learning model.

As one particular example, a computer system can receive a time series indicating discrete status information associated with an object over a time window. Examples of the object may include a human, a company, or a machine such as a wind turbine, robot, electrical transformer, or autonomous vehicle. The discrete status information can be a set of discrete values representing the status of the object at discrete points in time during the time window. Different discrete values may correspond to different statuses. For example, the object may have a status of "1" at time t₀, which may indicate that the object is operating in a desirable manner. The object may have a status of "3" at time t₂, which may indicate that the object is operating in an undesirable manner. Next, the computer system can transform the time series into a time series encoding, which can represent the time series as a vector that is compatible with a target NLP model. Each data point in the time series can correspond to an encoded element in the vector embedding. The computer system can then provide the time series encoding as input to a trained NLP model, which can generate one or more output embeddings based on the time series encoding.

In the above example, the one or more output embeddings may include a set of word embeddings associated with the time series. Each word embedding can be a vector corresponding to an individual encoded element of the time series encoding, which in turn can correspond to an individual data point in the time series. Thus, although called a "word embedding" herein for consistency with NLP parlance, it will be appreciated that in this context a word embedding is actually an x-dimensional vector associated with an individual time-series data point in vector space. Each word embedding can define a vector associated with a time-series data point in vector space, whereby the proximity of two vectors in vector space may indicate their similarity to one another.

Additionally or alternatively, in the above example, the one or more output embeddings may include a document embedding. A document embedding can be a vector corresponding to the time series encoding as a whole, which in turn can correspond to the time series as a whole. Thus, although called a "document embedding" herein for consistency with NLP parlance, it will be appreciated that in this context a document embedding is actually an x-dimensional vector associated with a time series as a whole in vector space. Each document embedding can define a vector associated with a time series as a whole in vector space, whereby the proximity of two vectors in vector space may indicate their similarity to one another.

After generating the one or more output embeddings, the computer system can derive attributes of the object based on the one or more output embeddings. For example, the computer system can derive the attributes directly from the one or more output embeddings. Additionally or alternatively, the computer system can execute aggregation and/or clustering processes (described in greater detail later on) on the output embeddings to derive the attributes.

In some examples, the computer system may apply other NLP techniques to the time series to determine other attributes associated with the object. For example, the computer system can identify one or more *n*-grams (e.g., bigrams, trigrams, etc.) in the time series data and derive additional attributes of the object based on the *n*-grams. Although *n*-grams are normally used to determine relationships between words in a text, in some examples these concepts may be applied to time series data for deriving contextual relationships between the data points in a time series.

After deriving the attributes, the computer system can use the attributes in a variety of ways. For instance, the computer system can use the attributes as input variables (e.g., independent variables) or output variables (e.g., dependent variables) in a set of training data for use in training a machine-learning model. The machine-learning model may be a predictive model, in some examples. The predictive model may be any suitable machine-learning model that is configured to predict a future characteristic of the object during a future time window. By training the machine-learning model using the attributes, the machine-learning model can generate more accurate results than may otherwise be possible. Through this training process, the machine-learning model can also learn new relationships that make it faster for the machine-learning model to converge to a solution than may otherwise be possible, which can reduce processing time and consumption of computing resources like memory. As another example, the computer system can use the attributes as at least part of an input dataset for a pretrained machine-learning model. By providing the attributes as input to the trained machine-learning model, the machine-learning model can provide more accurate results than may otherwise be possible. Providing the attributes as input can also allow the trained machine-learning model to converge to a solution faster than may otherwise be possible, which can reduce processing time and consumption of computing resources. In this way, the techniques described herein may improve the accuracy, speed, and resource consumption of the machine-learning model.

These illustrative examples are given to introduce the reader to the general subject matter discussed here and are not intended to limit the scope of the disclosed concepts. The following sections describe various additional features and examples with reference to the drawings in which like numerals indicate like elements, and directional descriptions are used to describe the illustrative examples but, like the illustrative examples, should not be used to limit the present disclosure.

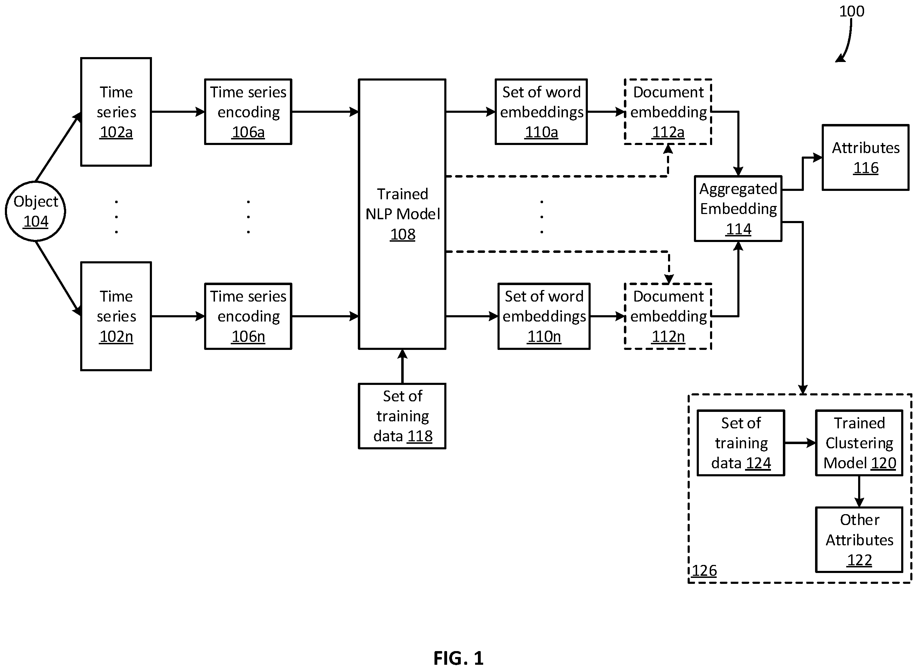

FIG. 1 shows an example of a process 100 for applying NLP techniques to time series data to derive attributes for use with a machine-learning model according to some aspects of the present disclosure. The process 100 can begin with a computer system receiving *N* time series 102a-n related to an object 104, where *N* can be any number including one. The computer system can receive the time series 102a-n from any suitable source, such as one or more databases. Each of the time series 102a-n can include a sequence of numerical data points over a time window. The time series 102a-n may span the same length of time (e.g., they may all span the last 48 months) or different lengths of time.

The data points in the time series 102a-n may represent any suitable information. For instance, the data points can indicate discrete statuses associated with the object 104 over the time window. As one specific example in which the object 104 is an individual, each of the time series 102a-n may correspond to different services (e.g., financial services such as credit lines or bank accounts) provided to the individual by one or more entities. In some such examples, the data points in the first time series 102a may indicate statuses (e.g., balances, past due amounts, etc.) related to the individual's usage of a first service over the prior time window, while the data points in the *N*^{th}time series 102n may indicate statuses related to the individual's usage of an *N*^{th} service over the prior time window. As another example in which the object 104 is a machine, the time series 102a-n may each correspond to different sensors configured for measuring parameters of the machine. Examples of the sensors may include temperature sensors, pressure sensors, inclinometers, accelerometers, fluid-flow sensors, voltmeters, ammeters, vibration sensors, humidity sensors, position sensors, force sensors, or any combination of these. In some such examples, the data points in each of the time series 102a-n may indicate sensor values measured by a respective sensor during the prior time window.

After receiving the *N* time series 102a-n, the computer system can convert the time series 102a-n into time series encodings 106a-n. For example, the computer system can generate a first time series encoding 106a based on a first time series 102a, and generate an *N*^{th} time series encoding 106n based on the *N*^{th} time series 102n. To generate a time series encoding for a given time series, the computer system can tokenize the time series data. This may involve treating the time series as a sequence of 'words' that can be further grouped into *n*-grams. The time series encoding can represent the corresponding time series as a vector, where each element of the vector corresponds to a single data point in the time series. Because NLP models are normally configured to accept a vector with certain dimensions as input, converting the time series 102a-n into the time series encodings 106a-n can make them more compatible with an NLP model.

Next, the computer system can provide the time series encodings 106a-n as input to a trained NLP model 108. The computer system may input the time series encodings 106a-n to the trained NLP model 108 sequentially or in parallel, depending on the architecture of the trained NLP model 108. The trained NLP model 108 can include a machine-learning model that is primarily designed for a natural-language processing task, such as word or document analysis. Examples of the machine-learning model can include a neural network, a decision tree, a support vector machine, or an ensemble of models.

Prior to receiving the time series encodings 106a-n as input, the trained NLP model 108 may have been pretrained using a set of training data 118. The training data 118 may include encoded (e.g., tokenized) time-series data. The encoded time-series data can include one or more discrete-value time series that have been encoded, for example so that each data point in the time series is treated like a word in a text input. The NLP model 108 can be iteratively tuned during the training phase based on the training data 118 to produce a trained NLP model 108 of sufficient accuracy, which may be assessed using one or more validation datasets.

If the trained NLP model 108 is a word embedding model, the trained NLP model 108 can be configured to output word embeddings based on the input. For example, the trained NLP model 108 may output a first set of word embeddings 110a corresponding to the first time series encoding 106a. In the first set of word embeddings 1 10a, each word embedding can correspond to a vector element in the first time series encoding 106a, which in turn can correspond to a single data point in the first time series 102a. Similarly, the trained NLP model 108 may output an *N*^{th} set of word embeddings 110n corresponding to the *N*^{th} time series encoding 106n. In the *N*^{th} set of word embeddings 110n, each word embedding can correspond to a vector element in the *N*^{th} time series encoding 106n, which in turn can correspond to a single data point in the *N*^{th} time series 102n. The sets of word embeddings 1 10a-n can be different from, but generated based on, the time series encodings 106n.

In some examples, the computer system may aggregate together the word embeddings in an individual set of word embeddings to generate a document embedding associated with a particular time series. For example, the computer system can aggregate together (e.g., average, sum, or otherwise combine) the word embeddings in the first set of word embeddings 110a to generate a first document embedding 112a associated with the first time series 102a. Similarly, the computer system can aggregate together the word embeddings in the *N*^{th} set of word embeddings 110n to generate an *N*^{th} document embedding 112n associated with the *N*^{th} time series 102n.

If the trained NLP model 108 is a document embedding model, the trained NLP model 108 can be configured to output a document embedding based on the input. For example, the trained NLP model 108 can output a first document embedding 112a corresponding to the first time series encoding 106a, which in turn can correspond to the first time series 102a. Similarly, the trained NLP model 108 can output an *N*^{th} document embedding 112n corresponding to the *N*^{th} time series encoding 106n, which in turn can correspond to the *N*^{th} time series 102n. In some examples, the trained NLP model 108 may output both a set of word embeddings 110a and a document embedding 112a based on an individual time series encoding 106a.

The computer system can next determine one or more attributes 116 associated with the object 104 based on one or more of the word embeddings 110a-n, one or more of the document embeddings 112a-n, or any combination of these. In some examples, the attributes 116 can be vectors of numbers that may not be human-interpretable (e.g., they may not have a facially apparent meaning to a human upon inspection). This can make the attributes 116 challenging to identify and describe without using the techniques described herein. Thus, the techniques described herein can be used to identify attributes 116 that may be unknown and potentially meaningless to a human, but have sufficient meaning to a machine-learning model to influence its outputs in a desired manner.

The computer system may also determine one or more attributes 116 associated with the object 104 based on an aggregation of the word embeddings 110a-n or the document embeddings 112a-n. For example, the computer system can aggregate the word embeddings 110a-n together to produce an aggregated embedding 114 (e.g., an average word embedding), from which the computer system can derive at least some of the attributes 116. The `words' used to create the word embedding may be individual time-series values or *n*-grams of time series values. As another example, the computer system can aggregate the document embeddings 112a-n together to produce an aggregated embedding 114 (e.g., an average document embedding), from which the computer system can derive at least some of the attributes 116.

Continuing with the above, in some examples the aggregated embedding 114 can be minimum or maximum embeddings. Because it may not be possible to apply minimum and maximum operations to vector values, to create such embeddings, the computer system may first project the vector valued embeddings into a 1-dimensional space (e.g., the real line) and then take the minimum and maximum values. The projection can be represented by taking a vector inner product with a fixed vector. Using a known word or document embedding as the fixed vector for reference can yield a similarity measure. For instance, computer system can compute the inner product of each document embedding with an embedding of the fixed vector {123456}, which can yield similarity measures. Other similarity measures can also be used, such as a distance in the embedding space. The computer system can then generate the maximum embedding based on the maximum of the computed similarity measures.

In some examples, the computer system can also determine other attributes 122 of the object 104 by performing a clustering process 126. For example, the computer system can provide one or more of the word embeddings 110a, document embeddings 112a-n, or aggregations thereof (e.g., aggregated embedding 114) as input to a trained clustering model 120. The clustering model 120 can be a machine-learning model that is configured classify an input into a particular cluster, which is selected from among a set of clusters based on the characteristics of the input. Examples of such clustering models can include a *k*-means clustering model, a Gaussian mixture model, or a DBSCAN (density-based spatial clustering of applications with noise) model. The clustering model 120 can receive the input and output a selected cluster assigned to the input. Since each cluster may have been preassigned one or more of the other attributes 122, the selected cluster can be indicative of the other attributes 122 associated with the input (and thus the object 104). For example, each cluster may be correlated to one or more of the other attributes 122 in a mapping, so that after the clustering model 120 selects the appropriate cluster for a given input, the computer system can use the mapping to determine which attributes correspond to the selected cluster.

Prior to receiving the input, the clustering model 120 may have been pretrained on a set of training data 124. For example, the clustering model 120 may undergo an unsupervised learning process using the set of training data 124, which may be unlabeled training data in this example. The clustering model 120 can be trained to identify distinct groups in the set of training data 124, or to otherwise define clusters that optimize a separation criterion. As another example, the clustering model 120 may undergo a supervised learning process using the set of training data 124, which may be labeled training data in this example. For instance, the training data 124 can include word embeddings and/or document embeddings that are prelabeled with assigned clusters, so that the clustering model 120 can learn these relationships during the training process. Either way, once trained, the clustering model 120 may be able to predict the correct cluster for an unknown input (e.g., an input that was not seen during the training process).

Through the above process, various attributes 116, 122 can be derived from one or more time series 102a-n by using natural-language processing techniques. Although this example only depicts one NLP model 108 for simplicity, other examples may employ multiple different kinds of NLP models to produce multiple different types of embeddings from which the attributes 116, 122 can be derived. Later examples will describe how these attributes 116, 122 can be used to improve the accuracy of a machine-learning model.

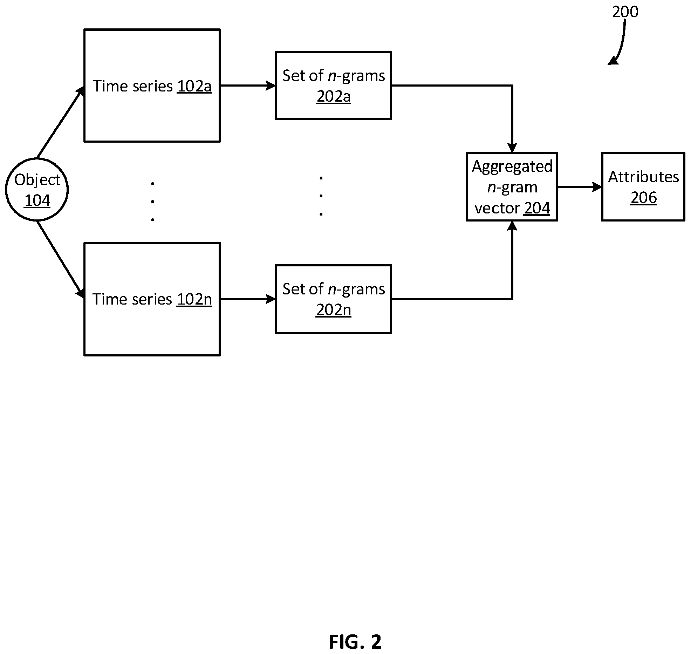

FIG. 2 shows an example of a process 200 for deriving additional attributes from one or more time series 102a-n using natural-language processing techniques according to some aspects of the present disclosure. The computer system may execute this process 200 additionally or alternatively to the process 100 shown in FIG. 1, for example to generate different types of attributes that may also be usable to improve the accuracy of a machine-learning model.

The process 200 can begin with the computer system receiving *N* time series 102a-n related to an object 104, where *N* can be any number including one. The computer system can receive the time series 102a-n from any suitable source, such as one or more databases. As noted above, the time series 102a-n may span the same length of time or different lengths of time (e.g., time series 102a may span six months and time series 102n may span 9 months).

The computer system can next generate respective sets of *n*-grams 202a-n based on the time series 102a-n. For example, the computer system can generate a first set of n-grams 202a based on the first time series 102a. Similarly, the computer system can generate an *N*^{th} set of *n-*grams 202n based on the *N*^{th} time series 102n. Note that in this context, *n* and *N* are not necessarily the same number. For example, there may be 47 time series (*N* = 47) for which the computer system can generate a set of bigrams (*n* = 2). To generate a set of *n*-grams 202a for a time series 102a, the computer system can use any suitable approach. For example, the computer system can employ the NLTK (Natural Language ToolKit) library in Python, which has bult-in functionality for deriving *n*-grams from an input.

The set of n-grams 202a generated for an individual time series 102a can include one or more types of *n*-grams, such as bigrams, trigrams, quadrigrams, or any combination of these. Since computing more types of *n*-grams may consume more computing resources, in some examples the computer system may only generate a few types of *n*-grams, such as only 1-grams, 2-grams, and 3-grams. For explanatory purposes, one example of a set of *n*-grams generated for the text string "ABCD" is shown in Table 1 below, but it will be appreciated that *n*-grams are derived herein for a time series rather than a text string.

**Table 1: All possible n-grams for the string "ABCD, " where T is the length of the text string**

| **n** | **Generated *n*-grams** | **No. of *n*-grams in string** |
|---|---|---|
| | | **T + 1 -n** |
| 1 | [A],[B],[C],[D] | 4 |
| 2 | [AB], [BC], [CD] | 3 |
| 3 | [ABC], [BCD] | 2 |
| 4 | [ABCD] | 1 |

Although *n*-grams are normally used to determine relationships between words in a text, in some examples these concepts may be applied to one or more time series 102a-n for deriving relationships between the time-series data points. For example, the time series 102a can include data points indicating statuses of an object 104 over a time period. From the time series 102a, the computer system can derive a trigram in which the object's status changed from a first status to a second status and back to the first status during the time period (e.g., a trigram of 1-2-1). The computer system can then count the number of times that this trigram occurred in the time series. This count may be more useful information than simply determining how many times the object 104 had the first status (e.g., two times) and the second status (e.g., one time) individually during the time period, because it gives more context. As one particular example, the times series 102a can correspond to a credit line, where the first status corresponds to paid-up and the second status corresponds to past due. In this example, it may be more useful to know that the individual was paid up, fell behind, but then immediately repaid the outstanding balance during the time period, than to know that the individual was paid-up twice and behind once during the time period. The former provides more context about the individual in terms of his payment habits than the latter.

After generating the sets of *n*-grams 202a-n associated with the time series 102a-n, the computer system can determine attributes 206 of the object 104 based on one or more of the sets of n-grams 202a-n. Additionally or alternatively, the computer system can aggregate together (e.g., average, sum, or otherwise combine) two or more sets of *n*-grams 202a-n to generate an aggregated *n*-gram vector 204, from which attributes 206 can be derived. For example, the computer system can aggregate together a first set of bigrams associated with the first time series 102a and a second set of bigrams associated with the *N*^{th} time series 102n to generate an aggregated bigram vector, from which at least some of the attributes 206 can be derived. As another example, the computer system can aggregate together a first set of quadrigrams associated with the first time series 102a and a second set of quadrigram associated with the *N*^{th} time series 102n to generate an aggregated quadrigram vector, from which at least some of the attributes 206 can be derived.

The attributes 206 can be any suitable information derived from one or more of the sets of *n*-grams 202a-n or their aggregates (e.g., aggregated *n*-gram vector 204). For example, the attributes 206 can be the total number of occurrences of a particular bigram in the first set of *n-*grams 202a, the frequency of each trigram in the first set of *n*-grams 202a, and the total number of quadrigrams across both the first set of *n*-grams 202a and the *N*^{th} set of *n*-grams 202n. As another example, the attributes 206 can be determined based on a predefined mapping between n-grams and the attributes. For instance, the presence of a certain bigram in the first set of *n*-grams 202a can suggest that an individual is a timely payor of outstanding balances. So, that bigram can be mapped to a timeliness attribute in the predefined mapping. Upon detecting that bigram in the first set of *n*-grams, the computer system can use the mapping to determine that the corresponding individual has the timeliness attribute. As yet another example, the presence of a certain trigram at least a threshold number of times in the first set of *n*-grams 202a can suggest that an individual is a late payor of outstanding balances. Upon detecting that trigram in the first set of *n*-grams 202a at least the threshold number of times, the computer system can use the mapping to determine that the corresponding individual has a tardiness attribute.

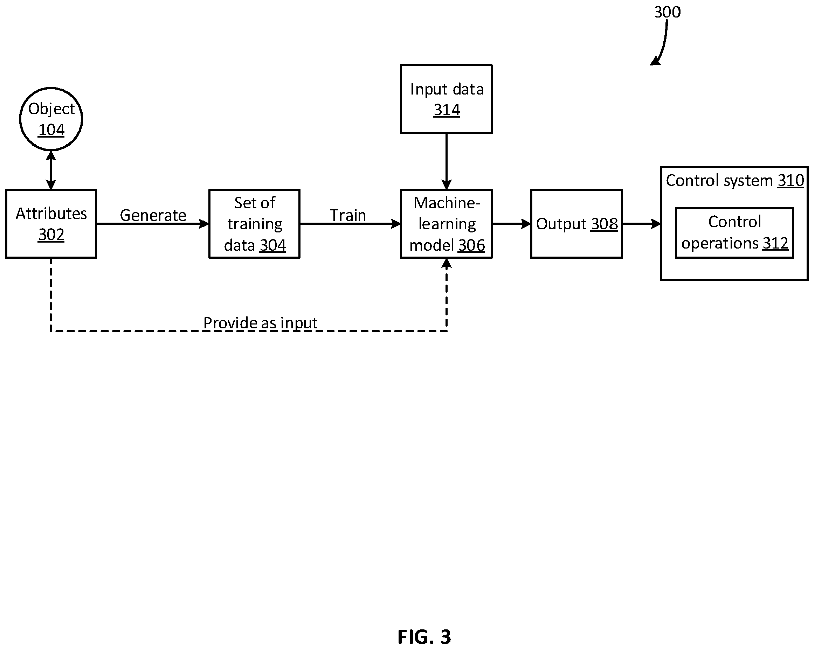

After determining the attributes (e.g., attributes 116, 122, and/or 206) associated with the object 104, the computer system may use the attributes with a machine-learning model. An example of this process 300 will now be described with respect to FIG. 3.

As shown in FIG. 3, the process 300 can begin with the attributes 302. The attributes 302 can be generated by applying any of the approaches described above to one or more time series. For example, one or more models or techniques that would, in other contexts, normally used in natural-language processing tasks can be applied to a time series to derive the attributes 302.

In some examples, the computer system can generate a training dataset for a machine-learning model 306. Examples of the machine-learning model 306 can include a neural network, a support vector machine (SVM), logistic regression model, decision tree, a gradient boosting machine (GBM), or an ensemble of multiple models. The training dataset can be generated based on some or all of the attributes 302. For example, the computer system can generate a training dataset that includes relationships between input values (e.g., independent variables) and output values (e.g., dependent variables), so that the machine-learning model 306 can learn these relationships during a training phase and apply them during a production phase to unknown inputs. In generating the training data 304, the computer system may use at least some of the attributes 302 as the input values or the output values. For example, the training dataset can include input-output pairs, where the inputs can include one or more characteristics (e.g., from a profile) of the user, and the outputs can include one or more of the attributes 302. The characteristics may include demographic characteristics (e.g., age, sex, income, marital status, geographic location, etc.) or other characteristics of the user. In some examples, the output values can include one or more payor types of the user. The payor type may indicate the user's qualities as a payor - e.g., timely, late, or delinquent. The payor types can be derived by analyzing the user's payment history over a selected time period, such as the last 48 months.

After generating the training dataset, the computer system can use the training data 304 to train the machine-learning model 306, for example by executing thousands or millions of training iterations to minimize a loss function. The machine-learning model 306 may be configured to perform any suitable task. For instance, in the above example, the machine-learning model may be a predictive model configured to predict a payor type of a new user based on the user's profile. Because training the machine-learning model 306 using the attributes 302 actually changes the underlying configuration (e.g., node weights) of the model 306, this training process can reconfigure the machine-learning model 306 in a way that allows it arrive at a more accurate result and/or at a faster result than may otherwise be possible. For example, if the machine-learning model 306 is not trained on the attributes 302, it may be harder for the machine-learning model 306 to accurately predict the payor type of a new user, if even possible at all. This is because machine-learning model 306 may not have the requisite internal connections or weights to arrive at a result more directly, so it may need to execute more computations to arrive at a result more indirectly, which can consume more memory, time, and processing power. Once trained, the machine-learning model 306 may be configured to receive an input dataset 314 and generate a corresponding output 308 based on the input dataset 314. An example of the input dataset 314 can be a profile of a new user. The output 314 may include one or more characteristics of the new user. The characteristics may include known characteristics, unknown characteristics, and/or latent characteristics. For example, the output 314 can include a current or future value of a known characteristic of the user. As another example, the output 314 can include a current or future value for a unknown characteristic of the user (e.g., a characteristic that was previously unknown about the user).

In other examples, the computer system may provide the attributes 302 as input to an trained machine-learning model 306. Thus, the attributes 302 can serve as the input dataset 314 in this context. The machine-learning model 306 may have been pretrained on a training dataset, which may include or exclude the attributes 302. The attributes 302 may be provided as input by themselves or in conjunction with other input values, for example to supplement those other input values. Providing the attributes 302 as input to the machine-learning model 306 may allow the machine-learning model 306 to generate an output 308 (e.g., any characteristic of the user such as a predicted payor type) that is more accurate than may be otherwise achievable. For instance, the computer system can provide the attributes 302 as a supplemental input to the machine-learning model 306, in addition to other input values. This can allow the machine-learning model 306 to make a more informed determination based on a wider scope of data than may otherwise be possible. In some examples, the machine-learning model 306 may need to be specifically configured to handle this supplemental input in addition to its normal inputs. So, the underlying architecture of the machine-learning model 306 can be modified to account for this supplemental input. These architectural modifications can be made during the training phase or at any other suitable time.

After generating the output 308, the computer system may transmit the output 308 to a control system 310. In some examples, the control system 310 can be software executing on the computer system. Alternatively, the control system 310 can may be another computer system, which can receive the output 308 via one or more networks such as the Internet. Either way, the control system 310 can be configured to automatically execute one or more control operations 312 based on the output 308. For example, the control system 310 can automatically grant or deny a user (associated with the input dataset 314) access to a product or service based on the output 308. As another example, the control system 310 can automatically notify an administrator based on the output 308. For instance, if the input dataset 314 corresponds to a machine, the control system 310 can automatically warn an operator of the machine about a current or predicted problem based on the output 308.

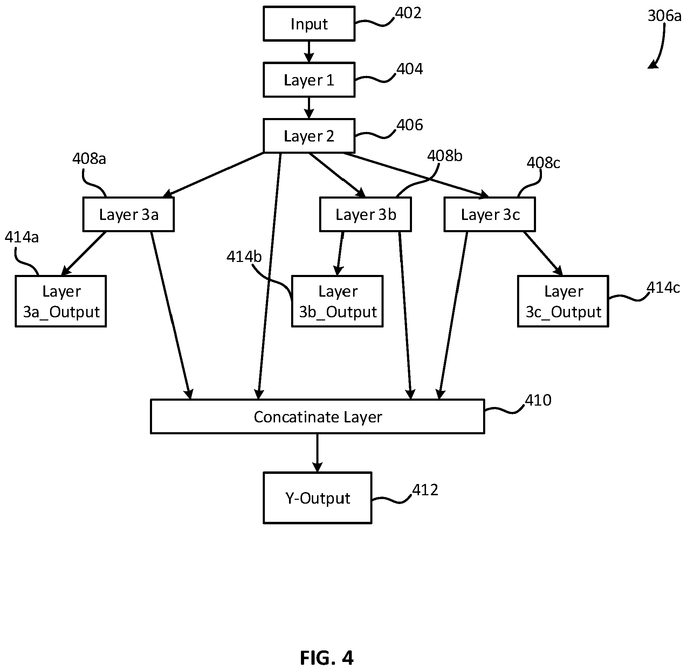

As noted above, in some examples the attributes 302 may be used to train a machine-learning model 306. Some examples of the underlying architecture of the machine-learning model 306 are shown in FIGS. 4-5. As noted above, the machine-learning model's architecture may need to be specifically configured to handle the attributes 302 derived through the processes described herein.

Referring now to FIG. 4, shown is a first architecture 306a for the machine-learning model 306. The first architecture 306a can include an input layer 402 that accepts the model inputs, which can be the independent variables in the training process. The first architecture 306a can also include three hidden layers 404, 406, 408. The first two hidden layers 404-406 can learn independent variable interactions and nonlinearities during the training process. The third hidden layer 408 can include any number of nodes, such as the three nodes 408a-c shown in FIG. 4. Each of the nodes 408a-c can generate a corresponding output 414a-c. During the training process, the outputs 414a-c can serve as the target variables, so that the machine-learning model can learn the relationships between the independent variables and the target variables. In this example, some or all of the target variables can correspond to attributes 302 derived using any of the processes described above. That is, during the training process, the outputs 414a-c can be set to any of the attribute values determined using the above processes, so that the machine-learning model can learn relationships between the independent variables and the attributes 302.

In the first architecture 306a, a binary auxiliary loss can be attached to each node 408a-c in the third hidden layer 408, for example, a binary cross entropy with a ReLU activation function. The outputs from the second layer 406 and/or third layer 408 can then be combined at a concatenation layer 410 to generate a main output 412, such as good/bad payor. The outputs 414a-c from the three nodes 408a-c may serve as auxiliary outputs to the main output 412.

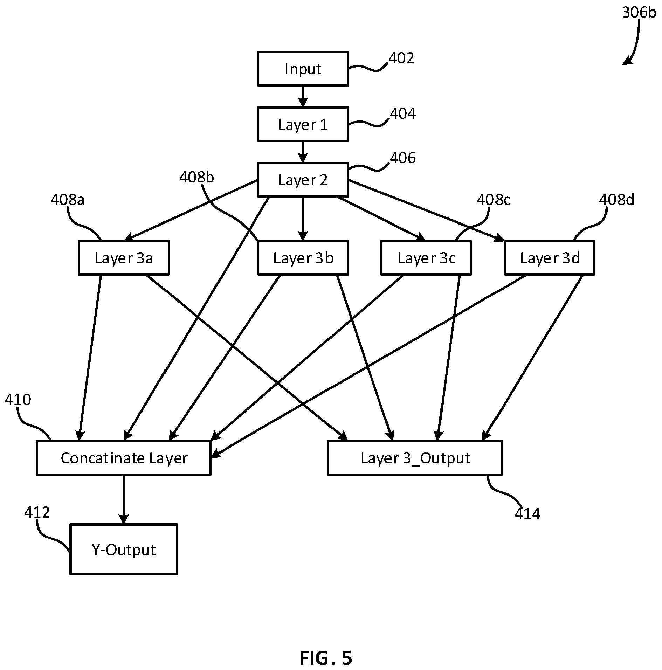

A second architecture 306b for the machine-learning model 306 is shown in FIG. 5. As shown, the second architecture 306b can include an input layer 402. The model inputs are the independent variables, similarly to the first architecture 306a. The second architecture 306b can also include three hidden layers 404, 406, 408, much like the first architecture 306a. The first two hidden layers 404-406 can learn independent variable interactions and nonlinearities during the training process. The third hidden layer 408 can include any number of nodes, such as the four nodes 408a-d shown in FIG. 5.

At the third hidden layer 408, there can be a multinomial auxiliary loss, categorical cross entropy with a SoftMax activation function. In this example, the nodes 408a-d can collectively generate a single corresponding output 414, which can be a multinomial output. One example of the output 414 from the three nodes 408a-c can be a categorical output indicating a behavioral pattern associated with an object 104, such as a payor type associated with an individual or a functional pattern associated with a machine. During the training process, the output 414 can serve as a target variable, so that the machine-learning model can learn the relationships between the independent variables and the target variable. In this example, the target variable can correspond to an attribute 302 derived using any of the processes described above. That is, during the training process, the output 414 can be set to an attribute value determined using any of the above processes, so that the machine-learning model can learn relationships between the independent variables and the attribute 302.

In the second architecture 306b, the outputs from the second layer 406 and/or third layer 408 can be combined at a concatenation layer 410 to generate a main output 412. The output 414 from the four nodes 408a-d may serve as an auxiliary output to the main output 412.

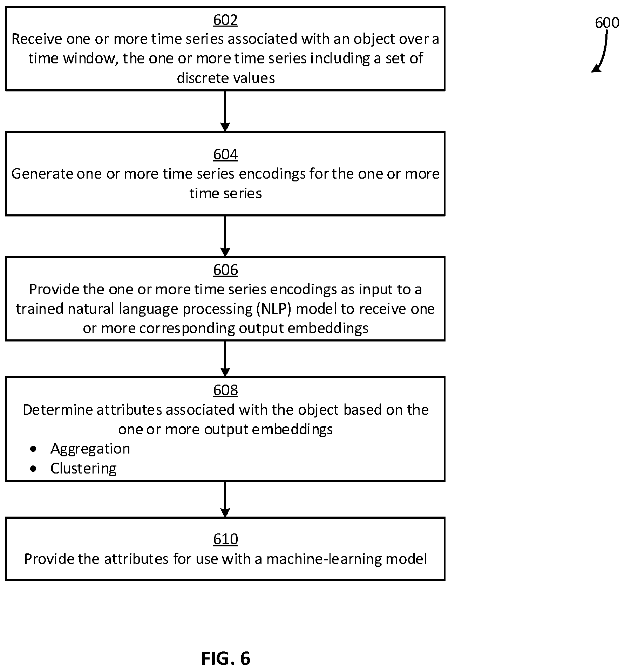

FIG. 6 shows a flowchart of an example of a process 600 for applying NLP techniques to time series data to derive attributes for use with a machine-learning model according to some aspects of the present disclosure. Other examples may involve more steps, fewer steps, different steps, or a different order of steps than is shown in FIG. 6. The process of FIG. 6 will now be described below reference to the components of FIGS. 1-3 above.

In block 602, a computer system receives one or more times series 102a-n associated with an object 104. The one or more time series 102a-n can include a set of data points spanning a time window, such as the last *X* weeks or months. The data points can be discrete values represented by characters or numbers (e.g., integers). The computer system can receive the one or more time series 102a-n from a local storage device, a remote computer system, or any other suitable source.

In block 604, the computer system generates one or more time series encodings 106a-n for the one or more time series 102a-n. For example, the computer system can generate a respective time-series embedding for each respective time series 102a-n. To generate a time series encoding, the computer system may generate a vector and convert each data point in a time series into an element in the vector. The element may be a floating point number in vector space representative of the data point's value, which may be an integer value. The time series encodings 106a-n may be configured to be supplied as input to a NLP model.

In block 606, the computer system provide the one or more time series encodings 106a-n as input to a trained NLP model 108 to receive one or more corresponding output embeddings, such as one or more sets of word embeddings 110a-n and/or one or more sets of document embeddings 112a-n. The output embeddings are different from the time series encodings 106a-n. In generating an output embedding, the trained NLP model 108 may determine relationships between each data point represented in the corresponding time series encoding. The trained NLP model 108 can then configure the output embedding to indicate those relationships.

In block 608, the computer system determines attributes 116 associated with the object 104 based on the one or more output embeddings. In particular, the computer system can determine the attributes 116 directly from the one or more sets of word embeddings 110a-n, directly from the one or more sets of document embeddings 112a-n, indirectly from derivatives of the above (e.g., the aggregated embedding 114 or a cluster assignment determined via the clustering process 126), or from any combination of these. As one example, the computer system may apply one or more predefined mappings or algorithms directly to one or more of the output embeddings, to correlate the output embeddings to the attributes 116. As another example, the computer system can supply one or more of the output embeddings as input to a trained clustering model 120, which can determine and output a cluster assignment based on the output embeddings. The computer system can then determine the attributes 116 based on the cluster assignment.

In block 610, the computer system provides the attributes 116 for use with a machine-learning model 306. For example, the computer system can provide the attributes 116 as part of a training dataset 304 or an input dataset 304 for use with the machine-learning model 306. When the attributes 116 are used as part of the training dataset 304, the machine-learning model 306 can be trained based at least in part on the attributes 116, which can help improve the speed and/or accuracy of the machine-learning model 306. When the attributes 116 are used as part of the input dataset 304, the machine-learning model 306 can be derive an output (e.g., a result such as a prediction) based at least in part on the attributes 116, which can help improve the speed and/or accuracy of the machine-learning model 306.

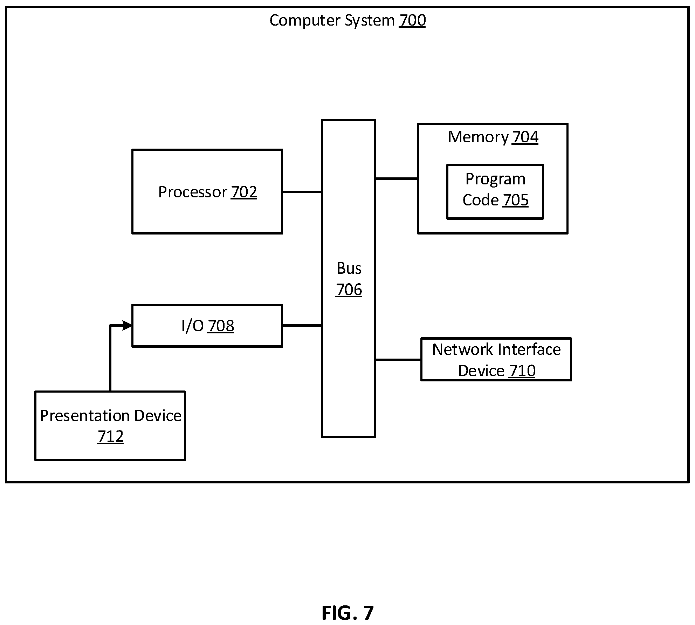

Any suitable computer system can be used to perform the operations described herein. For example, FIG. 7 is a block diagram depicting an example of a computer system 700 that can be used to implement one or more aspects described herein. The computer system 700 can include one or more computing devices for performing one or more of the operations described above.

The computer system 700 can include a processor 702. The processor 702 can include one or more processing devices made from physical hardware. The processor 702 can execute computer-executable program code 705 stored in the memory 704. Examples of a processor 702 include a microprocessor, an application-specific integrated circuit, a field-programmable gate array, or any other suitable processing device. The processor 702 can include or communicate with a memory 704. The memory 704 stores program code that, when executed by the processor 702, causes the processor to perform the operations described herein.

The memory 704 can include any suitable non-transitory computer-readable medium. A computer-readable medium can include any electronic, optical, magnetic, or other storage device capable of providing a processor with computer-readable program code or other program code. Non-limiting examples of a computer-readable medium include a magnetic disk, memory chip, optical storage, flash memory, storage class memory, a CD-ROM, DVD, ROM, RAM, an ASIC, magnetic tape or other magnetic storage, or any other medium from which a computer processor can read and execute program code. The program code may include processor-specific program code generated by a compiler or an interpreter from code written in any suitable computer-programming language. Examples of suitable programming language include C, C++, C#, Visual Basic, Java, Python, Perl, JavaScript, ActionScript, etc.

The computer system 700 can execute program code 705. The program code 705 may be stored in any suitable computer-readable medium and may be executed on any suitable processing device. Executing the program code 705 can configure the processor 702 to perform one or more of the operations described herein. Program code 705 stored in a memory 704 may include machine-executable instructions that may represent a procedure, a function, a subprogram, a program, a routine, a subroutine, a module, a software package, a class, or any combination of instructions, data structures, or program statements. A code segment may be coupled to another code segment or a hardware circuit by passing or receiving information, data, arguments, parameters, or memory contents. Information, arguments, parameters, data, etc. may be passed, forwarded, or transmitted via any suitable means including memory sharing, message passing, token passing, network transmission, among others. Examples of the program code 705 include one or more of the applications, engines, or sets of program code described herein.

The computer system 700 may also include a number of external or internal devices such as input or output devices. For example, the computer system 700 is shown with an input/output interface 708 that can receive input from input devices or provide output to output devices. Examples of the input devices can include a keyboard, mouse, touch-sensitive surface, etc. A bus 706 can also be included in the computer system 700. The bus 706 can communicatively couple one or more components of the computer system 700.

In some aspects, the computer system 700 can include one or more output devices. One example of an output device is the network interface device 710. A network interface device 710 can include any device or group of devices suitable for establishing a wired or wireless data connection to one or more data networks (e.g., a public data network such as the Internet). Examples of the network interface device 710 include an Ethernet network adapter, a modem, etc. Another example of an output device is the presentation device 712. The presentation device 712 can include any device or group of devices suitable for providing visual, auditory, haptic, or other suitable sensory output. Examples of the presentation device 712 include a touchscreen, a monitor, a speaker, a haptic actuator, or a separate mobile computing device.

The foregoing description of some examples has been presented only for the purpose of illustration and description and is not intended to be exhaustive or to limit the disclosure to the precise forms disclosed. Numerous modifications and adaptations thereof will be apparent to those skilled in the art without departing from the spirit and scope of the disclosure.

## Claims

1. A method (100, 200, 300, 600) executed by one or more processors of a computer system, the method comprising:
receiving (602) one or more time series (102a-102n) indicating discrete status information for an object (104) over a time window, wherein the discrete status information includes a set of discrete values representing discrete statuses associated with the object over the time window;
generating (604) one or more time series encodings (106a-106n) based on the one or more time series;
providing (606) the one or more time series encodings as input to a trained natural language processing (NLP) model (108), the trained NLP model being configured to generate one or more output embeddings (110a-110n, 112a-112b) corresponding to the one or more time series encodings;
determining (608) attributes (116, 302) associated with the object based on the one or more output embeddings; and
providing (610) the attributes for use with a machine-learning model (306) configured to predict a characteristic of the object.

2. The method (100, 200, 300, 600) of claim 1, wherein the one or more time series (102a-102n) includes a first time series (102a) and a second times series (102n), the one or more time series encodings (106a-106n) includes a first time-series encoding (102a) and a second time-series encoding (102n), and further comprising:
generating a first embedding (110a, 112a) using the first time-series encoding;
generating a second embedding (110n, 112n) using the second time-series encoding;
generating an aggregated embedding (114) by aggregating the first embedding and the second embedding; and
determining the attributes (116, 302) based on the aggregated embedding.

3. The method (100, 200, 300, 600) of claim 2, wherein the first embedding is a first document embedding (112a), the second embedding is a second document embedding (112n), and further comprising:
generating the first document embedding by supplying the first time-series encoding (106a) as input to the trained NLP model (108), the trained NLP model being configured to output the first document embedding based on the first time-series encoding; and
generating the second document embedding by supplying the second time-series (106n) encoding as input to the trained NLP model, the trained NLP model being configured to output the second document embedding based on the second time-series encoding.

4. The method (100, 200, 300, 600) of claim 2, wherein the first embedding is a first document embedding (112a), the second embedding is a second document embedding (112n), and further comprising:
generating the first document embedding by aggregating a first set of word embeddings (110a) generated by the trained NLP model (108) based on the first time-series encoding (106a); and
generating the second document embedding by aggregating a second set of word embeddings (110n) generated by the trained NLP model based on the second time-series encoding (106n).

5. The method (200) of any preceding claim, further comprising:
generating a set of *n*-grams (202a-202n) based on the set of discrete values in the one or more time series (102a-102n); and
determining additional attributes (206) associated with the object (104) based on the set of n-grams.

6. The method (200) of claim 5, wherein the one or more time series (102a-102n) includes a first time series (102a) and a second times series (102n), and further comprising:
generating a first set of *n*-grams (202a) based on the first time series;
generating a second set of *n*-grams (202n) based on the second time series;
generating an aggregated *n*-gram vector (204) by aggregating the first set of *n*-grams and the second set of n-grams; and
determining the additional attributes (206) associated with the object (104) based on the aggregated *n*-gram vector.

7. The method (100, 200, 300, 600) of any preceding claim, further comprising:
generating a set of training data (118) that includes encodings of a plurality of time series of discrete values; and
training a NLP model based on the set of training data to produce the trained NLP model (108).

8. The method (100, 200, 300, 600) of any preceding claim, further comprising:
determining at least one additional attribute (122) associated with the object (104) by providing the one or more output embeddings (110a-110n, 112a-112n) as input to a trained clustering model (120), wherein the trained clustering model is configured to select a particular cluster among a plurality of candidate clusters based on the one or more output embeddings, the particular cluster being indicative of the at least one additional attribute.

9. The method (100. 200, 300, 600) of claim 8, further comprising:
training a clustering model based on a set of training data (124) to produce the trained clustering model (120).

10. The method (100, 200, 300, 600) of any preceding claim, further comprising:
generating a set of training data (304) that includes one or more of the attributes (302) as one or more output variables; and
training the machine-learning model (306) based on the set of training data to produce a trained machine-learning model.

11. A system (700) comprising:
one or more processors (702); and
one or more memories (704) storing instructions (705) that are executable by the one or more processors for causing the one or more processors to perform the method (100, 200, 300, 600) of any preceding claim.

12. A non-transitory computer-readable medium (704) comprising program code (705) that is executable by one or more processors (702) for causing the one or more processors to perform the method (100, 200, 300, 600) of any of claims 1-10.
